# EUROPEAN PATENT APPLICATION

(11) **EP 2 631 548 A2**
(43) Date of publication of application: **28.08.2013**
(21) Application number: 13000868.3
(22) Date of filing: 21.02.2013
(51) Int. Cl.: F24D 19/00, F24D 19/06

(54) **Convector applicable to a heater for heating systems**

(30) Priority: 23.02.2012 IT BA20120013
(71) Applicant: Marchitelli, Nicola, 70121 Bari (IT)
(72) Inventor: Marchitelli, Nicola, 70121 Bari (IT)
(74) Representative: Russo, Dimitri

(57) **Abstract**

Convector (1), applicable to a heater (2) for heating systems, constituted of a rigid casing (3) provided with at least one centrifugal fan (4) and a thermostat (5).

The convector (1) is applicable to any type of heater (2) in cast iron, steel or aluminium, of traditional or other types of heating systems, and allows that the normal convective heat transfer caused by the thermosiphon effect, is associated with a further forced convective heat transfer (6), perpendicular to it, which increases the heat output of the heater (2) by optimizing the heat exchange between the air and the radiating elements of the heater.

## Description

### Field of the invention

The present invention relates to a convector applicable to heaters for heating systems conceived to solve the current problems connected with the slow and almost never effective and efficient heater effect or convective circulation.

### Background of the invention

The heater is a common radiant component of premises' heating systems, usually composed of elements, or modules, side by side in series and installed in order to provide a specific radiant surface; the modules can be made of cast iron, steel or aluminium.

The basic drawback of traditional heaters is due to the fact that it usually takes a medium-long time before the thermo-convective effect of the air environment, triggered by the thermosiphon effect, realizes the feeling of thermal comfort in the premises where they are installed.

The thermosiphon effect is the physical phenomenon where in a hydraulic circuit a convective circulation is established, only caused by the difference in density between the volumes of fluid at different temperatures.

In the prior art, traditional heaters have already been replaced with more efficient and effective systems since several years, although with much higher costs.

### Summary of the invention

The main purpose of the present invention is to provide a device that is easy and cheap to produce, also at an industrial level, and that can also be installed by the end user without the intervention of specialized technician.

A further object of the present invention is to provide a convector made in a way such as to facilitate its mounting, in a universal way, on all types of heaters actually existing on the market, and in general on a variety of heating systems.

These purposes and the consequent advantages are achieved by providing a convector according to the present invention.

### Brief description of the drawings

Further characteristics of the present invention will result more evident from the following detailed description of a preferred embodiment which is illustrated by way of an indicative, but not limitative, example, with reference to the accompanying drawings, where:
Fig 1 (Prior Art) is a schematic view of a heater installed in a room and provided with a known tower fan;
Fig 2 is a schematic top view of the convector according to the present invention and of the motion of the air heated by the radiator and ejected into the room with a transverse heat circulation;
Fig 3 is a schematic view of the thermal exchange and the forced convective heat transfer generated by the convector of Fig. 2 applied to a common heater.

### Detailed description of a preferred embodiment

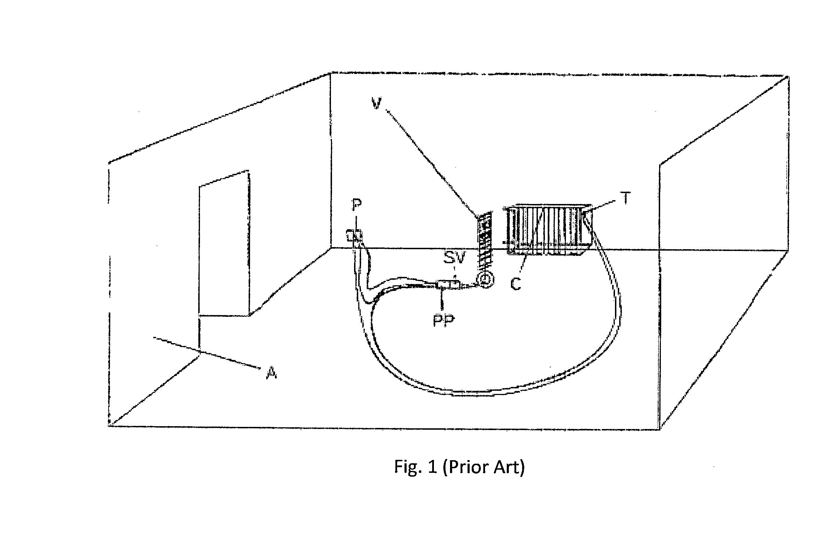

Figure 1 illustrates a heater C (made of cast iron, steel or aluminium), installed in an environment A and fitted with a tower fan V, a thermostat T, an electrical socket P, a plug-fan connector SV and a socket connector PP with the electrical outlet P from which an electric wire starts, returning from the thermostat, normally open, that turns on the tower fan at + 42 ° C, and turns it off at + 31 ° C.

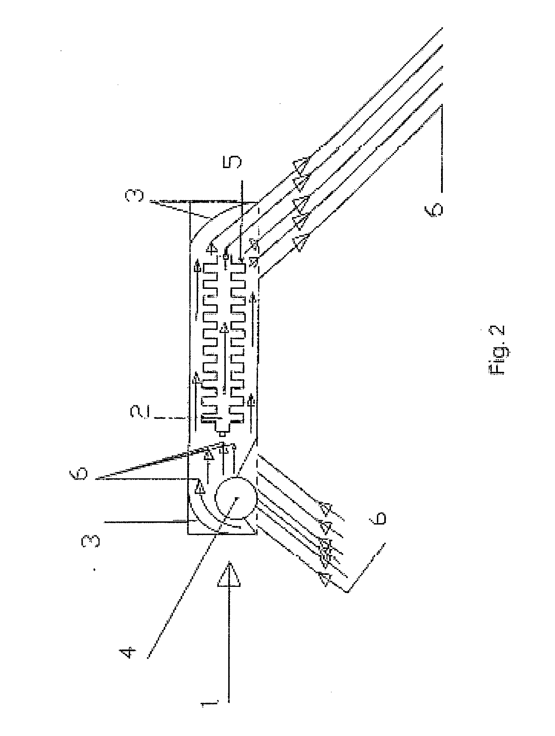

In Fig. 2 the convector 1 according to the present invention is applied to a heater 2 provided with a rigid casing 3, fitting in a universal way on any type of heater, and a centrifugal fan 4, placed in such a way as to favour a greater heat exchange between the ambient air and the radiating elements of the heater 2.

The air blown by the centrifugal fan 4 on the heater 2 and the air heated by the radiator and ejected into the room with a transverse heat circulation, generate a heat transfer whose flow is indicated by the arrows 6.

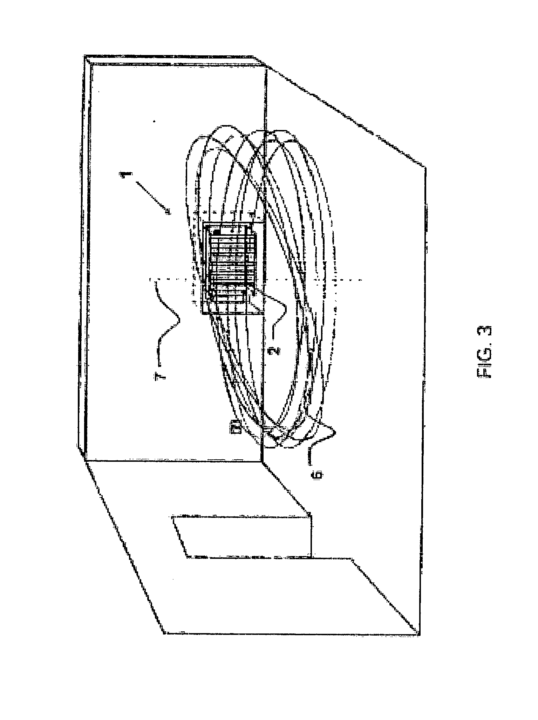

The thermostat 5, normally open, is a thermal switch which closes the circuit at + 42 ° C, and opens the circuit at + 31 ° C and determines the turning on/turning off of the fan. Fig. 3 illustrates a heater 2, equipped with said device 1 and the relevant forced convective heat transfer 6, having a vertical axis 7 perpendicular with respect to the usual axis caused by the thermosiphon effect.

The present invention fully and in a very simple way solves, with an industrially easily realizable device 1, the limitations and problems associated with conventional heating systems equipped with heaters in cast iron, steel or aluminium.

The convector 1 allows people who stay in the environment in which said device is installed, to perceive a better feeling of thermal comfort, because it optimizes the heat exchange between the air and the radiating elements of the heater 2, associating to the normal convective heat transfer due to the thermosiphon effect, a further forced convective heat transfer 6 with axis 7 roughly orthogonal to the axis of flow caused by said thermosiphon effect.

The presence of the thermostat 5 (for example of the normally open type with thermal switch at + 42 ° C and at + 31 ° C) allows to turn on and turn off the fan 4, respectively each time the temperature of the heater 2 raises or lowers, with respect to predetermined reference values.

The heater 2, which is associated the convector 1, at the same flow temperature, is able to develop a superior thermal power (which is very appreciable in undersized heaters), since the thermal delta between the inlet temperature and the outgoing temperature of the radiator is increased.

Furthermore, by means of the fan 4, the heat can be directed by forced convection where it is needed, limiting the stratification that leads to achieve the desired temperature at heights comprised between 1.50 and 2.00 m from the floor decking only when the upper layers of the environment are (unnecessarily) at much higher temperatures.

The energy saving can, therefore, be attributed to various reasons, that in any case involve a plurality of advantages in the application of the present invention, namely:
- functioning of the boiler at lower time intervals than normal (for example, for cast iron heaters the minimum energy saving is of about 50% with functioning of the programmable thermostat at intervals of 15 minutes);
- less heat dispersions through the pipes, thanks to the lower temperatures of the fluid, in particular in the return piping;
- further reductions of such heat dispersions by the most frequent stop of water circulating pump, which is pushed by pressure in the heater;
- recovery of the heat existing in the generator and in the network of pipes, by stopped recirculation pump;
- reduction of the return temperature of the water to the boiler, allowing the use of condensing boilers also on "high temperature" radiator systems, as the "lower" returning temperature into the boiler allows boilers, that in traditional systems would function as normal boilers, to effectively operate in a "condensing" way;
- increasing of the efficiency of the generator;
- achieving of the ideal conditions in a much faster timing;
- greater efficiency in environment heating, with much shorter cycles of switching on of the system and with longer cycles of switching off of the system, with consequent savings in energy consumption;
- electrical functioning of centrifugal fan that continues to deduct heat to the heater even when the boiler is turned off.

For safety reasons, as the centrifugal fan 4 works with electricity, the thermostat 5 could be activated with very low BTS (low voltage).

At a very low industrial cost, tower fans or similar could be made, with built-in normally open temperature sensor for the switching on and off of the fan at ideal temperatures reached by the cast iron, steel or aluminium radiators.

The convector can be realized with various dimensions and characteristics, such as to be able to cover the entire range of radiators existing today on the market, in order to be hooked laterally to the radiators (said hooking respecting distance and orientation from radiators), so as to be able to obtain the maximum heat output from radiators (made of cast iron, steel or aluminium), providing a greater room comfort, good energy savings and a greater respect for the environment.

It is also evident that various changes, modifications, adaptations, integrations, and replacements of elements with other functionally equivalent ones, can be made other than those specifically mentioned above without departing from the scope of the invention which is defined by the following claims.

## Claims

1. Convector applicable to a heater for heating systems **characterized in that** a centrifugal fan (4) triggers a forced convective heat transfer (6) with its axis (7) perpendicular to said convective heat transfer due to the thermosiphon effect of the heater (2) and to which it is associated.

2. Convector according to claim 1, **characterized in that** the centrifugal fan (4), electrically powered, is equipped with a thermostat (5) for its turning on or off respectively whenever the temperature of the heater (2) reaches predetermined reference values.

3. Convector according to claims 1 and 2, **characterized in that** the thermostat (5) is a thermal switch activated with BTS (low voltage).

4. Convector according to preceding claims **characterized in that** the thermostat (5) is a mini-thermal probe applicable on the heater (2) by means of a well-insulated support.

5. Convector according to preceding claims **characterized in that** it is inserted into a rigid casing (3) applicable to any cast iron, aluminum, or steel heater (2) for traditional or other heating systems, and made of a material suitable to improve the heat dissipation of the elements of the heater.

6. Convector according to preceding claims **characterized in that** the centrifugal fan (4) generates ventilation that directs the heat, by forced heat convection.

7. Convector according to preceding claims **characterized in that** the centrifugal fan (4) generates horizontal ventilation, or oriented according to requirements, for the quick achievement of ideal thermal conditions.

8. Heater, to which the convector according to the preceding claims is associated, **characterized in that**, at constant flow temperature, it generates a higher thermal power due to the increase of the thermal delta between the inlet temperature and the outlet of the heating body.
